(19) Europäisches Patentamt
European Patent Office
Office européen des brevets

(11) EP 2 458 769 B1

(12) **EUROPEAN PATENT SPECIFICATION**

(45) Date of publication and mention of the grant of the patent:
**21.08.2013 Bulletin 2013/34**

(51) Int Cl.:
***H04L 1/00*** *(2006.01)* ***H04L 5/00*** *(2006.01)*
***H04L 27/38*** *(2006.01)* ***H04L 27/26*** *(2006.01)*
***H04L 27/00*** *(2006.01)*

(21) Application number: **11190986.7**

(22) Date of filing: **28.11.2011**

(54) **Method of transmitting symbols and HomePlug AV system**

Verfahren zur Übertragung von Symbolen und HomePlug AV System

Procédé de transmission de symboles et système HomePlug AV

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2010 IT VA20100085**

(43) Date of publication of application:
**30.05.2012 Bulletin 2012/22**

(73) Proprietor: **Dora S.p.A.**
**11100 Aosta (IT)**

(72) Inventor: **Guerrini, Eleonora**
**11100 Aosta (IT)**

(74) Representative: **Barbaro, Gaetano et al**
**Società Italiana Brevetti S.p.A.**
**Via G. Carducci, 8**
**20123 Milano (IT)**

(56) References cited:
**US-A1- 2009 135 934**

- **GUERRINI E ET AL: "Bit-loading algorithms and SNR estimate for HomePlug AV", POWER LINE COMMUNICATIONS AND ITS APPLICATIONS, 2007. ISPLC '07. IEEE INTERNATIONAL SYMPOSIUM ON, IEEE, PI, 1 March 2007 (2007-03-01), pages 77-82, XP031176311, DOI: 10.1109/ISPLC.2007.371101 ISBN: 978-1-4244-1089-7**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 458 769 B1

Printed by Jouve, 75001 PARIS (FR)

## Description

TECHNICAL FIELD

This invention relates to digital communications and more particularly to a method of transmitting symbols that implements a stochastic algorithm.

BACKGROUND

Research in *multi-carrier* modulation has grown tremendously in recent years due to the demand for high-speed data transmission over fading channels (e.g. power line, wireless, etc.) where severe inter-symbol interference (ISI) can occur. Instead of employing single-carrier modulation with a very complex adaptive equalizer, the channel is divided into $N$ sub-channels that are essentially ISI-free independent Gaussian channels.

The so-called "bit loading" is a widely employed technique in multi-carrier systems to efficiently assign bits to each carrier depending on the signal-to-noise ratio (SNR). In general, bit loading techniques allow transmitting a higher number of bits over the carriers where the SNR is higher and a lower number of bits over the carriers where the SNR is lower.

In order to better understand the field of application, reference is made to the so-called HomePlug AV (HPAV) communication system, though any skilled reader will immediately appreciate that the proposed solution can be applied also to systems different from HPAV, that is herein illustrated purely as a non-limiting example.

HomePlug [1], an industrial organization that now comprises more than 70 companies, was formed in 2000 to develop and standardize specifications for home networking technology using existing power line wiring. The last generation technology of HomePlug, called HomePlug AV (HPAV) [2]-[3], is a communication system where the proposed bit loading algorithm can be applied.

In FIG. 1, the HPAV physical layer on which we base our analysis is shown[1]. At the transmitter, the information bits are scrambled and fed into a turbo convolutional encoder with code rate $R$. The code rate can be $R$ =1/2 or, after puncturing, $R$ =16/21. The coded sequences are then bit-by-bit interleaved and converted into QAM symbols through a bit-mapper. The data symbols (belonging to unit power constellations) are serial-to-parallel-converted for orthogonal frequency division multiplexing (OFDM) modulation. Each OFDM carrier can be differently loaded, depending on the bit loading algorithm, with one of the available modulations: BPSK, QPSK, 8-QAM, 16-QAM, 64-QAM, 256-QAM and 1024-QAM. In HPAV the OFDM modulation is implemented by using a 3072-point inverse discrete Fourier transform (IDFT). Furthermore, to comply with frequency regulatory bodies it is not possible the use of all the carriers; for example, according to the USA regulations, only 917 carriers, out of the 1536 carriers from DC to 37.5 MHz, can be employed for useful transmission. To reduce the complexity of the receiver, a suitable cyclic prefix is used to remove both ISI and interchannel interference (ICI). Finally, before an analog front end (AFE) block, which sends the resulting signal to the power line channel, a peak limiter block is inserted to minimize the peak-to-average power ratio (PAPR). At the receiver the signal after an AFE block is fed to an automatic gain control (AGC) and time synchronism blocks. Then, the cyclic prefix is removed and the OFDM demodulation, which is implemented by the 3072-point discrete Fourier transform (DFT), is performed. The following assumptions are made:

i) the cyclic prefix completely eliminates ISI and ICI;
ii) a perfect synchronization is guaranteed, and
iii) the channel is time invariant within each packet.

[1] As explained in [2], the input bits from the MAC are structured by the HPAV transmitter differently depending on whether they are HPAV data, HPAV control information or HomePlug 1.0 control information. In this document, for the sake of simplicity, we will refer to the more common HPAV data format only.

The output from the OFDM demodulator is then sent to a soft-input soft-output (SISO) de-mapper, a de-interleaver, and a turbo convolutional decoder, which, in our solution, implements the Bahl, Cocke, Jelinek and Raviv (BCJR) algorithm [4] in an improved Max-Log-MAP form [5]. Successively, the bits provided by the decoder are de-scrambled in order to reconstruct an estimation of the transmitted bits. To complete the description of FIG. 1, the SNR estimate module performs the estimation of the SNR starting from the signal produced by the demodulator and it is input to the bit loading block.

The problem of bit loading has been widely studied in the literature and it is part of a more general problem that is the possibility of redistributing the power and the bits available over the various carriers, as a function of the SNR, in order to improve the overall performance of the system.

A milestone method, the "water filling" algorithm [6], has long been known to generate the optimal energy distribution and to achieve the maximum capacity. However, even if it yields the optimal energy distribution, the maximum capacity could be achieved only if an infinite granularity in constellation size is assumed, which is not realizable. For this reason, suboptimal solutions have been studied, as for example in [7], but the proposed solution is very slow for applications that transmit over a large number of carriers and where a high number of bits can be loaded in each symbol. In the past, the loading issue has been analyzed using two main different approaches [8], referred to "bit rate maximization" and "margin maximization", respectively. The bit rate maximization approach aims at maximizing the overall throughput of the system with a constraint on the transmission power (see, for example, [9] and [10]). The margin maximization approach aims, instead, at minimizing the transmission power with a constraint on the overall throughput of the system (see, for example, [11]-[14]). The proposed solutions of both approaches are based on the possibility of redistributing the power and the bits over the various carriers. Other examples of algorithms where power and bit loading issues are jointly studied can be found in [15] and [16]. On the other hand, communication systems can be subject to regulations that do not allow power allocation. A typical example is the HomePlug AV (HPAV) system, where the algorithms described above cannot be applied. In fact, these systems with uniform (non-adaptive) power allocation are the field of application of our proposed solution. In this case, suitable bit loading algorithms are described in [17]-[20] . All these solutions aim at maximizing the overall throughput of the system, guaranteeing at the same time that the bit error rate (BER) remains below a given threshold, hereafter referred as target BER. In [17] and [18] different techniques have been proposed for multi-carrier uncoded systems; however, if applied to a coded system, they do not exploit the error-correction capabilities of the code, which means that the target BER is satisfied with a large margin, but at the expense of a reduction in terms of throughput. In the document [19], upon the disclosure of which the preamble of claim 1 is drafted, a bit loading algorithm that aims at exploiting the error capability of the turbo code using a metric based on the LLRs is presented. Although the achieved performance is good, the iterative nature of the algorithm implies a high computational complexity. The solution proposed in [20] can be applied to a linear precoded discrete multitone modulation (LP-DMT) system, which implements a combination of multi-carrier and spread spectrum techniques.
In the contest of bit loading and turbo code there is still the need of an algorithm that efficiently exploits the error-correction capability of the code but that has a reduced complexity.

SUMMARY

A method of transmitting symbols of a digital transmission constellation that allows to maximize the transmission throughput with a pre-established bit-error rate or block error rate is proposed.

Differently from the classic bit loading algorithms, the herein proposed algorithm is not fully deterministic, but comprises a stochastic operation for deciding whether to transmit symbols according to a first constellation or to a second constellation. More precisely, the novel method comprises the steps of:

a) identifying a first digital transmission constellation of an ordered set of the number of bits $m$ that allows a communication with a pre-established maximum bit-error-rate or block-error-rate $\beta^{(T)}$ and with the greatest signal-to-noise ratio smaller than the signal-to-noise ratio $\gamma$ of a received signal;

b) identifying a second digital transmission constellation of the ordered set of the number of bits $\breve{m}$ that corresponds to the constellation with the number of bits per symbol immediately greater than that of the first digital transmission constellation;

c) determining a first probability 1-$P$ of use of the first digital transmission constellation and a second probability $P$ of use of the second digital transmission constellation that would make the expected number of received erroneous bits correspond to said pre-established maximum bit-error-rate or block-error-rate $\beta^{(T)}$, the second probability being the complement to 1 of the first probability and being determined in function of the bit-error-rate or block-error-rate $P_e^{(m)}(\gamma)$ and $P_e^{(\breve{m})}(\gamma)$ of said digital transmission constellations first and second in correspondence of the signal-to-noise ratio $\gamma$ of the received signal and of the number of bits $m$ and $\breve{m}$ of a symbol of the first constellation and of the second constellation, respectively;

d) transmitting a symbol with a digital transmission constellation selected randomly between the constellations first and second with the respective probabilities of use first 1-$P$ and second $P$.

The novel algorithm may be advantageously used for transmitting a plurality of symbols in a multi-carrier modulation system or in a HomePlug AV system, and may be implemented by a computer or processor executing a software program.

The invention is defined in the annexed claims.

BRIEF DESCRIPTION OF THE DRAWINGS

**Figure 1** shows a block diagram for a HPAV physical layer, for data transmission.
**Figure 2** compares the BLER vs. SNR of a HPAV system, with code rate $R = 1/2$ , over an AWGN channel when the JPC bit loading algorithm is applied with a target BLER of $10^{-1}$ and a jump probability of 0.25.
**Figure 3** is an enlarged view of FIG. 2 where the SNRs that achieve the target BLER are highlighted for BPSK, QPSK and 8-QAM constellations, which are $\gamma_1^{0.25} = -0.9671\,\mathrm{dB}$, $\gamma_2^{0.25} = 1.8756\,\mathrm{dB}$ and $\gamma_3^{0.25} = 4.7629\,\mathrm{dB}$, respectively.
**Figure 4** depicts the graph of the probability of jump vs. SNR of the HPAV system, with code rate $R$ =1/2, over an AWGN channel with a target BLER of $10^{-1}$.
**Figure 5** depicts a graph of the throughput vs. SNR over an AWGN channel for $R$ = 1/2 in the case of the novel JPC and the prior BTC bit loading algorithms when a target BLER of $10^{-1}$ is considered.
**Figure 6** depicts a graph of the BLER vs. SNR over an AWGN channel for $R$ =1/2 in the case of the novel JPC and the prior BTC bit loading algorithms when a target BLER of $10^{-1}$ is considered.
**Figure 7** depicts a graph of the throughput vs. SNR over an AWGN channel for $R$ = 16/21 in the case of the novel JPC and the prior BTC bit loading algorithms when a target BLER of $10^{-1}$ is considered.
**Figure 8** depicts a graph of the BLER vs. SNR over an AWGN channel for $R$ =16/21 in the case of the novel JPC and the prior BTC bit loading algorithms when a target BLER of $10^{-1}$ is considered.
**Figure 9** depicts a graph of the throughput vs. SNR over the OPERA channel model 1 for $R$ =1/2 in the case of the novel JPC and the prior BTC bit loading algorithms when a target BLER of $10^{-1}$ is considered.
**Figure 10** depicts a graph of the BLER vs. SNR over the OPERA channel model 1 for $R$ = 1/2 in the case of the novel JPC and the prior BTC bit loading algorithm when a target BLER of $10^{-1}$ is considered.
**Figure 11** depicts a graph of the throughput vs. SNR over the OPERA channel model 1 for $R$=16/21 in the case of the novel JPC and the prior BTC bit loading algorithms when a target BLER of $10^{-1}$ is considered.
**Figure 12** depicts a graph of the BLER vs. SNR over the OPERA channel model 1 for $R$ =16/21 in the case of the novel JPC and the prior BTC bit loading algorithms when a target BLER of $10^{-1}$ is considered.

DESCRIPTION OF EXEMPLARY EMBODIMENTS

The bit loading algorithm disclosed herein, that may be classified as an algorithm that aims at maximizing the throughput while guaranteeing an overall target BER or, alternatively, an overall target block error rate (BLER) with uniform power allocation, efficiently exploits the error-correction capability of the code and has a reduced complexity. Differently from the known bit loading techniques based on deterministic rules, the novel algorithm contemplates a probabilistic approach and it can be applied with success to both coded and uncoded systems.
Before introducing the novel bit loading algorithm, hereinafter referred as the Jump Probability Computation (JPC) algorithm, the prior BTC bit loading algorithm [19] is revisited, in order to better understand how the novel algorithm operates.
The following nomenclature will be used:

$N$ : number of carriers;
$k$ : carrier index, $k = 1, 2, ..., N$;
$m_k$ : number of bits loaded on the $k$-th carrier;
$\gamma_k$ : SNR of the $k$-th carrier;
$\beta^{(T)}$ : fixed target BER or BLER
$\gamma^{(m_k,T)}$ : SNR limit value to achieve the fixed target $\beta^{(T)}$ when $m_k$ bits are loaded on the $k$-th carrier;
$C$ : set of all the possible numbers of bits that can be mapped.

**BER Threshold Constant (BTC) Algorithm**

The prior BTC algorithm attempts to maximize the overall throughput of the system with a uniform power allocation, guaranteeing a target BER (or BLER) per carrier. In general, the BER (or BLER) performance of a system as a function of the SNR can be obtained by simulations. For example, in [21] it has been computed for the coded HPAV system. Consequently, for each constellation an SNR limit value can be fixed for a given target BER (or BLER).

The problem solved by the BTC is:

$$\begin{cases} \max\limits_{m_k \in C} m_k \\ \text{s. t. } \gamma_k \geq \gamma^{(m_k, T)} \end{cases} \qquad k = 1, 2, \ldots, N \qquad (1)$$

The algorithm may optionally employ a memory look-up table that contains the SNR limit value for each allowable modulation.

In ideal conditions, i.e. when it is not performed any estimation and the channel state information (CSI) is assumed to be known at the receiver, the BTC algorithm is a conservative bit loading; that means the target BER (or BLER) is guaranteed with a large margin, with a consequent loss in throughput.

**Novel Algorithm**

The novel algorithm, herein referred as "Jump Probability Computation algorithm" (JPC), starts from an allocation based on the BTC and it aims at increasing the throughput, reducing the margin over the overall target BER (or BLER).

The key idea of the JPC algorithm is the following: after the constellation assignment based on the classic BTC algorithm, to make a "jump" into the constellation of the immediately higher order depending on an appropriate probability defined for each carrier, still guaranteeing the overall target BER (or BLER) of the system.

Let $P_k$ be the probability of jump into the constellation of the immediately higher order for the *k*-th carrier and let $P_k$ be a random variable uniformly distributed within [0, 1]. The JPC algorithm can be detailed in the following steps:

1. Evaluate a first bit allocation $\{m_k\}$ based on the BTC algorithm;

2. Determine the bit allocation $\{\breve{m}_k\}$ that corresponds to the immediately higher constellation, with $\breve{m}_k. \in C$ ;
3. Given the SNR over each carrier $\{\gamma_k\}$, compute[2] the respective probability of jump $\{P_k\}$;
4. Generate $\{p_k\} \in U[0,1]$;
5. The final bit allocation $\{q_k\}$ is given by

$$q_k = \begin{cases} m_k & \text{if } p_k > P_k \\ \breve{m}_k & \text{if } p_k \leq P_k \end{cases} \quad k = 1, 2, \ldots, N \qquad (2)$$

We notice that the target BER (or BLER) is guaranteed only if the number of realizations is large enough to have reliable statistics; that means that the target is guaranteed over each carrier after a proper observation time and it is guaranteed per groups of carriers if the number of carriers is sufficiently large. Hereinafter the computation of $P_k$ is explained.

The computation of $P_k$, the probability of jump into the constellation of the immediately higher order for the *k*-th carrier, is a crucial issue for the JPC bit loading algorithm, since the performance of the algorithm depends on the accuracy of $P_k$. Furthermore, a fast computation is a fundamental requirement for an efficient implementation of the proposed solution. In general, referring to the *k*-th carrier, $P_k$ depends on the fixed target BER (or BLER) $\beta^{(T)}$, on the SNR $\gamma_k$ and on the constellations associated to $m_k$ and $\breve{m}_k$. For the computation of the probability of jump, let us consider an additive white Gaussian noise (AWGN) channel, where the SNR $\gamma_k$ [2] The computation of $\{P_k\}$ will be described hereinafter. is the same for each carrier, i.e. $\gamma_k = \gamma$ with $k = 1, 2, \ldots, N$. Clearly, in an AWGN channel, the bit allocation is the same for each carrier, hence the carrier index can be neglected $m_k = m$ and also $P_k$ is the same for each carrier $P_k = P$, with $k = 1, 2, \ldots, N$. Hereinafter, different procedures to compute $P$ given $\gamma$ are described. In specific cases, if the BER (or BLER) can be expressed in a closed-form, the value of $P$ can be analytically computed; for all the other cases, an alternative procedure needs to be found.

To apply the above procedure, the closed-form expressions of the BER (or BLER) as a function of the SNR must be available for all the considered constellations. If this assumption is verified, let $\beta^{(T)}$ be the fixed target BER and let $\gamma^{(m.T)}$ and $\gamma^{(m.T)}$ be the SNR thresholds of the BTC algorithm that allow loading $m$ and $\breve{m}$ bits, respectively. For each

$$\gamma \in \left(\gamma^{(m.T)}, \gamma^{(\breve{m}.T)}\right),$$

the probability of jump from the constellation that loads $m$ bits to the constellation that loads $\breve{m}$. bits needs to be computed. In a multi-carrier system with $N$ available carriers, the total number of loaded bits is

$$n = n^{(m)} + n^{(\breve{m})} \qquad (3)$$

where $n^{(m)}$ and $n^{(\breve{m})}$ are the number of bits mapped over the carriers that load $m$ and $\breve{m}$ bits, respectively. Assuming a probability of jump $\tilde{P}$, these parameters can be expressed as follows

$$n^{(m)} = \left(1 - \tilde{P}\right) \cdot m \cdot N \qquad (4)$$

$$n^{(\breve{m})} = \tilde{P} \cdot \breve{m} \cdot N \qquad (5)$$

With this bit loading, the overall BER, $\tilde{\beta}$, is given by

$$\tilde{\beta} = P_e^{(m)}(\gamma) \cdot \frac{n^{(m)}}{n} + P_e^{(\breve{m})}(\gamma) \cdot \frac{n^{(\breve{m})}}{n} \qquad (6)$$

where $P_e^{(m)}(\gamma)$ and $P_e^{(\breve{m})}(\gamma)$ are the BER associated to the constellations of $m$ and $\breve{m}$ bits, respectively, at an SNR of $\gamma$. Substituting (3)-(5) in (6), the overall BER becomes

$$\tilde{\beta} = \frac{P_e^{(m)}(\gamma) \cdot \left(1 - \tilde{P}\right) \cdot m + P_e^{(\breve{m})}(\gamma) \cdot \tilde{P} \cdot \breve{m}}{\left(1 - \tilde{P}\right) \cdot m + \tilde{P} \cdot \breve{m}} \qquad (7)$$

hence we have

$$\tilde{P} = \frac{\left(P_e^{(m)}(\gamma) - \tilde{\beta}\right) \cdot m}{\left(P_e^{(m)}(\gamma) - \tilde{\beta}\right) \cdot m - \left(P_e^{(\breve{m})}(\gamma) - \tilde{\beta}\right) \cdot \breve{m}} \qquad (8)$$

The probability of jump, *P*, that guarantees the fixed target BER is the value that satisfies eq. (8) when $\tilde{\beta} = \beta^{(T)}$ and it is given by

$$P = \frac{\left(P_e^{(m)}(\gamma) - \beta^{(T)}\right) \cdot m}{\left(P_e^{(m)}(\gamma) - \beta^{(T)}\right) \cdot m - \left(P_e^{(\tilde{m})}(\gamma) - \beta^{(T)}\right) \cdot \tilde{m}} \qquad (9)$$

An example of a system where the analytical procedure can be applied is an uncoded system. In [22] the closed-form expressions of BER, as a function of the SNR, are computed for PAM, QAM, PSK and FSK modulations.

In general, the BER (or BLER) closed-form expressions may be unavailable or too complex to be efficiently used; therefore, an alternative solution has to be proposed. A general procedure, based on simulations, to compute *P* for a given $\gamma$ is the following:

I. Fix the target BER (or BLER).

II. Define a range of SNRs of interest, which includes all the SNRs where the available constellations can properly work[3], namely $[\gamma^{LOW}, \gamma^{HIGH}]$.

[3] The range of SNRs of interest depends on the considered system, in particular on its architecture (modulations and demodulation types, coding and decoding schemes etc.).

III. Define a set[4] of SNRs, which belong to $[\gamma^{LOW}, \gamma^{HIGH}]$, hereafter referred as $\Omega$.

[4] We observe that the number of the elements of the set influences the accuracy of the computation of *P*: the higher the number is, the better the accuracy is.

IV. Fix an arbitrary value for the probability of jump[5], $\overline{P}$.

[5] The initial assigned value, $\overline{P}$, as well the following assigned values indicated in point VII, can be arbitrary selected within the range (0,1).

V. For each $\gamma \in \Omega$:

a. Evaluate the bit allocation $\{m\}$ based on the BTC algorithm.

b. Apply the JPC algorithm with the probability of jump $\overline{P}$, obtaining the bit allocation $\{\overline{q}\}$.

c. Compute, by simulations, the overall BER (or BLER) of the system with the bit allocation $\{\overline{q}\}$.

VI. Store the SNRs that achieve the target BER (or BLER), hereafter referred as $\gamma_{\{m\}}^{\overline{P}}$. Note that there is an SNR for each constellation.

VII. Repeat point V-VI for other *L* values *of* $\overline{P}$. Let $\{\overline{P}_1, \overline{P}_2, ..., \overline{P}_L\}$ be the considered **values of the jump probability. The values** $\mathcal{A} = \left\{\left(\overline{P}_1, \gamma_{\{m\}}^{\overline{P}_1}\right), \left(\overline{P}_2, \gamma_{\{m\}}^{\overline{P}_2}\right), ..., \left(\overline{P}_L, \gamma_{\{m\}}^{\overline{P}_L}\right) : \forall m \in C\right\}$ are stored.

VIII. Given an SNR $\tilde{\gamma} \in \Omega$, interpolate the points stored in A in order to compute the relative probability of jump $\tilde{P}$.

In order to clarify the procedure, an example of the computation of the probability of jump is given in the case of the HPAV system. First, let us fix a target BLER of $10^{-1}$, as required in point I. Considering the aforementioned target BLER, a reasonable range of SNRs, $\Omega$, for the HPAV system could be [-5 dB, 20 dB] in the case of *R* = 1/2 and [0 dB, 35 dB] in the case of *R*=16/21 (point II). For the sake of simplicity, the example is explained for the *R* =1/2 case only, but it can be easily extended to the *R* =16/21 case. According to point III, the set of SNRs is formed by all the SNRs within the range [-5 dB, 20 dB] with a step of 0.1 dB. First, let us fix the probability of jump *P* equal to 0.25 (point IV). Furthermore, for all the SNRs of the set, the BTC algorithm is applied (point V-a), the final bit allocation given by the JPC algorithm is evaluated (point V-b) and the overall BLER of the system is computed (point V-c). In FIG. 2, the BLER, as a function of the SNR, achieved performing the JPC algorithm with a jump probability of 0.25, is shown for each available constellation of the HPAV system.

The labels reported correspond to the constellation loaded by the BTC, but the respective curves are not obtained with this constellation only; for example, the "BPSK" curve is obtained randomly loading about 75% of BPSK and 25% of QPSK, accordingly to the jump probability of 0.25. We observe that the 1024-QAM is not present, since it is not possible the jump into a higher constellation. Still referring to FIG. 2, the SNRs that achieve the fixed target BLER with a jump probability of 0.25, $\gamma_{\{m\}}^{0.25}$, are selected for each constellation (point VI). FIG. 3 is a zoom of FIG. 2 where the SNRs that guarantee the target BLER with a jump probability of 0.25 for the BPSK, QPSK and 8-QAM are highlighted.

Steps V-VI are repeated for different probabilities of jump, namely 0.5 and 0.75, and the values of $\gamma_{\{m\}}^{0.5}$ and $\gamma_{\{m\}}^{0.75}$ are computed and stored (point VII). According to point VIII, as illustrated in FIG. 4, it is possible to compute the probability of jump associated to a generic SNR within the range [-5 dB, 20 dB] by interpolating the points obtained up to now, which correspond to the marks of the curves. In particular, in FIG. 4, a linear interpolation has been used.

For example, at an SNR of 0 dB the probability of jump from a BPSK into a QPSK is about 0.55 while at an SNR of 10 dB the probability of jump from a 16-QAM into a 64-QAM is about 0.85.

We observe that, in the reported example, three values of $\gamma_{\{m\}}^{P}$ for each constellation have been calculated, which means 18 values in total[6]. This computation can be made off-line, while the real-time processing of the signal is limited to an interpolation. Therefore, the increase in complexity of the JPC with respect to the BTC algorithm is only given by the uniform random number generator and the interpolating function. Achieving an accurate estimation of the probability of jump for each SNR of interest is a crucial aspect to enhance the performance of the JPC algorithm. In general, if the number of values computed off-line is high, a coarse interpolation can be sufficient; on the other hand, if the number of these values is low, a more complex interpolation is needed.

## NUMERICAL RESULTS

The novel JPC bit loading algorithm, applied to the HPAV system, has been simulated and its performance is shown in terms of throughput and BLER versus SNR. For comparison purposes, the performance of the BTC bit loading algorithm is also reported.

In the following simulations, a target BLER of $10^{-1}$ is fixed and the ideal case of

[6] The values $\gamma_{\{m\}}^{0}$ and $\gamma_{\{m\}}^{1}$ correspond to the SNR thresholds stored in the look-up table of the BTC algorithm, hence they are already available without the necessity of a further computation.

the CSI known at the receiver is considered. First, an AWGN channel is considered. In FIG. 5 and in FIG. 6 the throughput and the BLER versus the SNR are shown, respectively, in the case of code rate *R* = 1/2.

The classic BTC algorithm guarantees the target with a large margin, being the BLER almost null for all the SNR values. On the other hand, the JPC algorithm presents a BLER very close to the target, increasing the throughput compared to the BTC case. In FIG. 7 and in FIG. 8, similar results are depicted for the code rate *R* =16/21.

In order to investigate the proposed solution under a more realistic environment, a power line channel model is introduced. In particular, the multipath channel model proposed by the open power line communication European research alliance (OPERA) project [23]-[24] is considered. In particular, the OPERA channel model 1 is employed, while the noise is AWGN. The throughput is calculated by averaging the allocated bits of the bit loading algorithms over many realizations of the considered channel model. In FIG. 9 and in FIG. 10 the throughput and the BLER versus the SNR are shown, respectively, in the case of the code rate *R* = 1/2.

In FIG. 9, a gain in throughput of the JPC algorithm compared to the BTC is observed at every SNR; for example, at 15 dB it is almost 10 Mb/s. Clearly, the gain is coupled with a reduction of the margin over the target BLER, as depicted in FIG. 10. In FIG. 11 and in FIG. 12, the throughput and the BLER versus the SNR are shown, respectively, in the case of the code rate *R* =16/21.

Similar results are observed. In particular, a gain in throughput of the JPC algorithm compared to the BTC is observed at every SNR, as shown in FIG. 11, with a gain of approximately 12 Mb/s at 20 dB. Moreover, FIG. 12 shows that the BLER is almost null in the BTC case, while it is very close to the target in the JPC case.

The claims as filed are integral part of this description and are herein incorporated by reference.

## REFERENCES

[1] http://homeplug.org/home/

[2] HomePlug PowerLine Alliance, "HomePlug AV baseline specification," Version 1.1, May 2007.

[3] "HomePlug AV white paper," http://ww.homeplug.org/tech/whitepapers/HPAV-White-Paper_050818.pdf

[4] L. R. Bahl, J. Cocke, F. Jelinek, and J. Raviv, "Optimal decoding of linear codes for minimizing symbol error rate," IEEE Trans. On Inform. Theory, vol. 20, pp. 284-287, March 1974.
[5] J. Vogt and A. Finger, "Improving the max-log MAP turbo decoder," IEEE Elect. Lett., vol. 36, pp. 1937-1939, Nov. 2000.
[6] R. G. Gallager, Information theory and reliable communication, New York, Wiley, 1968.
[7] J. A. C. Bingham, "Multicarrier modulation for data transmission: an idea whose time has come," IEEE Comm. Magazine, pp. 5-14, May 1990.
[8] J. Campello, "Optimal discrete bit loading for multicarrier modulation systems," IEEE Symp. Info. Theory, p. 193, Aug. 1998.
[9] A. Leke and J. M. Cioffi, "A maximum rate loading algorithm for discrete multitone modulation systems," IEEE Globecom 1997, pp. 1514-1518, Nov. 1997.
[10] B. S. Krongold, K. Ramchandran and D. L. Jones, "Computationally efficient optimal power allocation algorithms for multicarrier communication systems," IEEE Trans. on Comm., pp. 23-27, Jan. 2000.
[11] P. S. Chow, J. M. Cioffi and J. A. C. Bingham, "A practical discrete multitone transreceiver loading algorithm for data transmission over spectrally shaped channels," IEEE Trans. on Comm., pp. 773-775, Apr. 1995.
[12] R. F. H. Fisher and J. B. Huber, "A new loading algorithm for discrete multitone transmission," IEEE Globecom 1996, pp. 724-728, Nov. 1996.
[13] J. Campello, "Practical bit loading for DMT," IEEE ICC 1999, pp. 801-805, June 1999.
[14] N. Papandreou and T. Antonakopoulos, "A new computationally efficient discrete bit-loading algorithm for DMT applications," IEEE Trans. On Comm., pp. 785-789, May 2005.
[15] D. Matas and M. Lamarca, "Optimum power allocation and bit loading with code rate constraint," IEEE SPAWC 2009, pp. 687-691, June 2009.
[16] H. Y. Qing and P. Q. C. M. Jiao, "An efficient bit and power allocation algorithm for multi-carrier systems," IEEE ICCCAS 2009, pp. 100-103, July, 2009.
[17] A. M. Wyglinski, F. Labeau and P. Kabal, "Bit loading with BER-constraint for multicarrier systems," IEEE Trans. on Wireless Comm., pp. 1383-1387, July 2005.
[18] E. Guerrini, G. Dell'Amico, P. Bisaglia and L. Guerrieri, "Bit-loading algorithms and SNR estimates for HomePlug AV," IEEE ISPLC 2007, pp. 77-82, Mar. 2007.
[19] L. Guerrieri, E. Guerrini, D. Veronesi and P. Bisaglia, "Method for the transmission on multiple-carrier communications systems, and corresponding transmitter and computer-program product," US 2009/0135934 A1.
[20] A. Maiga, J.-Y. Baudais and J.-F. Hélard, "Very high bit rate power line communications for home networks," IEEE ISPLC 2009, pp. 313-318, March 2009.
[21] L. Guerrieri, P. Bisaglia, G. Dell'Amico and E. Guerrini, "Performance of the turbo coded HomePlug AV system over power-line channels," IEEE ISPLC 2007, pp. 138-143, March 2007.
[22] N. Benvenuto and G. Cherubini, Algotithms for communications systems and their applications, John Wiley & Sons, Chichester, U.K., 2002.
[23] "OPERA proj ect," http://www.ist-opera.org
[24] M. Babic, M. Hagenau, K. Dostert and J. Bausch, "Theoretical postulation of PLC channel model," OPERA, Tech. Rep., March 2005.

## Claims

**1.** A method of transmitting symbols of a digital transmission constellation, the transmission constellation belonging to a pre-established set of digital transmission constellations, ordered from the constellation with the smallest number of bits per symbol up to the constellation with the greatest number of bits per symbol, the respective bit-error-rate or block-error-rate vs. signal-to-noise characteristics of which are known, comprising the steps of:

a) identifying a first digital transmission constellation of said ordered set of the number of bits m that allows a communication with a pre-established maximum bit-error-rate or block-error-rate $\beta^{(T)}$ and with the greatest signal-to-noise ratio smaller than the signal-to-noise ratio $\gamma$ of a received signal;

b) identifying a second digital transmission constellation of said ordered set of the number of bits $\breve{m}$ that corresponds to the constellation with the number of bits per symbol immediately greater than that of said first digital transmission constellation;

**characterized in that** the method comprises the steps of:

c) determining a first probability 1- $P$ of use of the first digital transmission constellation and a second probability $P$ of use of the second digital transmission constellation that would make the expected number of received erroneous bits correspond to said pre-established maximum bit-error-rate or block-error-rate $\beta^{(T)}$, said second probability being the complement to 1 of said first probability and being determined in function of the bit-error-rate or block-error-rate $P_e^{(m)}(\gamma)$ and

$$P_e^{(\breve{m})}(\gamma)$$

of said digital transmission constellations first and second, respectively, said bit-error-rate or block-error-rate $P_e^{(m)}(\gamma)$ and $P_e^{(\breve{m})}(\gamma)$ corresponding to said signal-to-noise ratio $\gamma$ of the received signal and to the number of bits $m$ and $\breve{m}$ of a symbol of the first constellation and of the second constellation, respectively;

d) transmitting a symbol with a digital transmission constellation selected between said first and second constellation on the basis of a random variable $p \in [0,1]$, in accordance with
p>P, first constellation chosen;
p≤P, second constellation chosen.

**2.** The method of claim 1, wherein said second probability of use $P$ is determined according to the following equation:

$$P = \frac{\left(P_e^{(m)}(\gamma) - \beta^{(T)}\right)\cdot m}{\left(P_e^{(m)}(\gamma) - \beta^{(T)}\right)\cdot m - \left(P_e^{(\breve{m})}(\gamma) - \beta^{(T)}\right)\cdot \breve{m}}$$

**3.** The method of claim 1, wherein said second probability of use $P$ is determined through the following steps:

determining a first discrete set of values ($\Omega$) of the signal-to-noise ratio of the received signal;
determining a second discrete set of probability values ($\{\overline{P}_1,\overline{P}_2,...,\overline{P}_L\}$) of said second probability of use;
filling in a look-up table of signal-to-noise ratio limit values for each, combination of a value ($\overline{P}_i$) of said second discrete set with a digital transmission constellation of said ordered set, by:

1) for each signal-to-noise ratio of the received signal of the first discrete set ($\Omega$):

1i) determining an average number of bits of a symbol to be transmitted as the average of the number of bits $\breve{m}$ and $m$ of a symbol of the second constellation and of the first constellation weighted with said second probability of use ($\overline{P}_i$) of the second discrete set and the complementary value thereof ($1-\overline{P}_i$), respectively,
1ii) estimating the communication bit-error-rate or the block-error-rate in correspondence of said average number of bits of a symbol and of said value of said first discrete set;

2) for the considered combination of a value ($\overline{P}_i$) of said second discrete set with said digital transmission constellation, storing the signal-to-noise ratio limit value that allows a pre-established maximum bit-error-rate or block-error-rate $\beta^{(T)}$;
determining said second probability of use $P$ in function of the signal-to-noise ratio $\gamma$ of the received signal, either by reading in said look-up table the probability value corresponding to said signal-to-noise ratio $\gamma$ of the received signal or by interpolating the probability values corresponding to the signal-to-noise ratios limit values closest to said signal-to-noise ratio $\gamma$ of the received signal.

**4.** The method of one of claims 1 to 3, wherein said ordered set of digital transmission constellations comprises BPSK, QPSK, 8-QAM, 16-QAM, 64-QAM, 256-QAM and 1024-QAM.

**5.** The method of one of claims 1 to 4, wherein said symbols are transmitted according to a multi-carrier modulation, the steps of the method being executed for each used carrier.

**6.** A computer readable medium storing a software code adapted to cause a computer to carry out the steps of the method of one of claims 1 to 5 when said software is executed by the computer.

**7.** A HomePlug AV system comprising a circuit adapted to execute the steps of the method of one of claims 1 to 5.

**Patentansprüche**

**1.** Verfahren zur Übertragung von Symbolen einer digitalen Übertragungskonstellation, wobei die Übertragungskonstellation zu einem vorher festgelegten Satz digitaler Übertragungskonstellationen gehört, die von der Konstellation mit der kleinsten Bitanzahl pro Symbol bis zur Konstellation mit der größten Bitanzahl pro Symbol geordnet sind, deren jeweilige Bitfehlerhäufigkeit oder Blockfehlerhäufigkeit als Funktion der Signal-Rausch-Eigenschaften bekannt sind, das die Schritte aufweist:

a) Identifizieren einer ersten digitalen Übertragungskonstellation des geordneten Satzes der Bitanzahl *m*, die eine Kommunikation mit einer vorher festgelegten maximalen Bitfehlerhäufigkeit oder Blockfehlerhäufigkeit $\beta^{(\tau)}$ ermöglicht, und mit dem größten Signal-Rausch-Verhältnis, das kleiner als das Signal-Rausch-Verhältnis $\gamma$ eines Empfangssignal ist;

b) Identifizieren einer zweiten digitalen Übertragungskonstellation des geordneten Satzes der Bitanzahl $\breve{m}$, die der Konstellation mit der Bitanzahl pro Symbol entspricht, die unmittelbar größer als die der ersten digitalen Übertragungskonstellation ist;

**dadurch gekennzeichnet, daß** das Verfahren die Schritte aufweist:

c) Bestimmen einer ersten Verwendungswahrscheinlichkeit 1-*P* der ersten digitalen Übertragungskonstellation und einer zweiten Verwendungswahrscheinlichkeit *P* der zweiten digitalen Übertragungskonstellation, die dafür sorgen würden, daß die erwartete Anzahl empfangener fehlerhafter Bits der vorher festgelegten maximalen Bitfehlerhäufigkeit oder Blockfehlerhäufigkeit $\beta^{(\tau)}$ entspricht, wobei die zweite Wahrscheinlichkeit das Komplement zu 1 der ersten Wahrscheinlichkeit ist und als Funktion der Bitfehlerhäufigkeit oder Blockfehlerhäufigkeit $P_e^{(m)}(\gamma)$ und

$$P_e^{(\breve{m})}(\gamma)$$

der ersten bzw. zweiten digitalen Übertragungskonstellation bestimmt wird, wobei die Bitfehlerhäufigkeit oder Blockfehlerhäufigkeit $P_e^{(m)}(\gamma)$ und

$$P_e^{(\breve{m})}(\gamma)$$

dem Signal-Rausch-Verhältnis $\gamma$ des Empfangssignals und der Bitanzahl *m* und $\breve{m}$ eines Symbols der ersten Konstellation bzw. der zweiten Konstellation entspricht;

d) Übertragen eines Symbols mit einer digitalen Übertragungskonstellation, die aus der ersten und zweiten Konstellation auf der Grundlage einer Zufallsvariable $p \in [0,1]$ ausgewählt wird, gemäß $p>P$, erste Konstellation wird gewählt; $p \leq P$, zweite Konstellation wird gewählt.

**2.** Verfahren nach Anspruch 1, wobei die zweite Verwendungswahrscheinlichkeit P gemäß der folgenden Gleichung bestimmt wird:

$$P = \frac{\left(P_e^{(m)}(\gamma) - \beta^{(\tau)}\right)\cdot m}{\left(P_e^{(m)}(\gamma) - \beta^{(\tau)}\right)\cdot m - \left(P_e^{(\breve{m})}(\gamma) - \beta^{(\tau)}\right)\cdot \breve{m}}$$

**3.** Verfahren nach Anspruch 1, wobei die zweite Verwendungswahrscheinlichkeit *P* durch die folgenden Schritte bestimmt wird:

Bestimmen eines ersten diskreten Satzes von Werten (Ω) des Signal-Rausch-Verhältnisses des Empfangssignals;
Bestimmen eines zweiten diskreten Satzes von Wahrscheinlichkeitswerten ($\{\overline{P}_1,\overline{P}_2,...,\overline{P}_L\}$) der zweiten Verwendungswahrscheinlichkeit;
Ausfüllen einer Nachschlagtabelle von Signal-Rausch-Verhältnisgrenzwerten für jede Kombination eines Werts ($\overline{P}_i$) des zweiten diskreten Satzes mit einer digitalen Übertragungskonstellation des geordneten Satzes, durch:

1) für jedes Signal-Rausch-Verhältnis des Empfangssignals des ersten diskreten Satzes (Ω):

1i) Bestimmen einer durchschnittlichen Bitanzahl

eines zu übertragenden Symbols als den Durchschnitt der Bitanzahl *m* und $\breve{m}$ eines Symbols der zweiten Konstellation und der ersten Konstellation gewichtet mit der zweiten Verwendungswahrscheinlichkeit ($\overline{P}_i$) des zweiten diskreten Satzes bzw. des komplementären
Werts davon (1-$\overline{P}_i$),
1ii) Schätzen der Kommunikationsbitfehlerhäufigkeit oder der Blockfehlerhäufigkeit entsprechend der durchschnittlichen Bitanzahl eines Symbols und des Werts des ersten diskreten Satzes;

2) für die betrachtete Kombination eines Werts ($\overline{P}_i$) des zweiten diskreten Satzes mit der digitalen Übertragungskonstellation Speichern des Signal-Rausch-Verhältnisgrenzwerts, der eine vorher festgelegte maximale Bitfehlerhäufigkeit oder Blockfehlerhäufigkeit $\beta^{(\tau)}$ ermöglicht;

Bestimmen der zweiten Verwendungswahrscheinlichkeit *P* als Funktion des Signal-Rausch-Verhältnisses γ des Empfangssignals entweder durch Ablesen in der Nachschlagtabelle des Verwendungswahrscheinlichkeitswerts, der dem Signal-Rausch-Verhältnis γ des Empfangssignals entspricht, oder durch Interpolieren der Verwendungswahrscheinlichkeitswerte, die den Signal-Rausch-Verhältnisgrenzwerten entsprechen, die dem Signal-Rausch-Verhältnis γ des Empfangssignals am nächsten liegen.

**4.** Verfahren nach einem der Ansprüche 1 bis 3, wobei der geordnete Satz digitaler Übertragungskonstellationen BPSK, QPSK, 8-QAM, 16-QAM, 64-QAM, 256-QAM und 1024-QAM umfaßt.

**5.** Verfahren nach einem der Ansprüche 1 bis 4, wobei die Symbole gemäß einer Mehrfachträgermodulation übertragen werden, wobei die Schritte des Verfahrens für jeden verwendeten Träger ausgeführt werden.

**6.** Computerlesbares Medium, das einen Softwarecode speichert, der eingerichtet ist, einen Computer zu veranlassen, die Schritte des Verfahrens nach einem der Ansprüche 1 bis 5 auszuführen, wenn die Software durch den Computer ausgeführt wird.

**7.** HomePlug AV-System, das eine Schaltung aufweist, die eingerichtet ist, die Schritte des Verfahrens nach einem der Ansprüche 1 bis 5 auszuführen.

## Revendications

**1.** Procédé de transmission de symboles d’une constellation numérique de transmission, la constellation de transmission appartenant à un ensemble préétabli de constellations numériques de transmission, ordonné depuis la constellation ayant le plus petit nombre de bits par symbole jusqu’à la constellation ayant le plus grand nombre de bits par symbole, le taux d’erreurs de bits ou le taux d’erreurs de blocs respectif en fonction des caractéristiques signal-sur-bruit étant connu, comprenant les étapes suivantes :

a) identifier une première constellation numérique de transmission de l'ensemble ordonné de nombre de bits m qui permet une communication avec un taux d'erreurs de bits ou un taux d'erreurs de blocs maximum préétabli $\beta^{(r)}$ et dont le plus grand rapport signal-sur-bruit est inférieur au rapport signal-sur-bruit $\gamma$ d'un signal reçu ;
b) identifier une seconde constellation numérique de transmission de l'ensemble ordonné de nombre de bits $\tilde{m}$ qui correspond à la constellation dont le nombre de bits par symbole est immédiatement supérieur à celui de la première constellation numérique de transmission ;
**caractérisé en ce que** le procédé comprend les étapes suivantes :
c) déterminer une première probabilité 1-P d'utilisation de la première constellation numérique de transmission et une seconde probabilité P d'utilisation de la seconde constellation numérique de transmission qui ferait que le nombre attendu de bits erronés reçus correspondrait au taux d'erreurs de bits ou au taux d'erreurs de blocs $\beta^{(r)}$ maximum préétabli, la seconde probabilité étant le complément à 1 de la première probabilité et étant déterminée en fonction du taux d'erreurs de bits ou du taux d'erreurs de blocs $P_e^{(m)}(\gamma)$ et $P_e^{(\tilde{m})}(\gamma)$ des première et seconde constellations numériques de transmission, respectivement, le taux d'erreurs de bits ou le taux d'erreurs de blocs $P_e^{(m)}(\gamma)$ et $\mathbf{P}_e^{(\tilde{m})}(\gamma)$ correspondant au rapport signal-sur-bruit $\gamma$ du signal reçu et aux nombres de bits m et $\tilde{m}$ de symboles de la première constellation et de la seconde constellation, respectivement,
d) transmettre un symbole avec une constellation numérique de transmission choisie parmi les première et seconde constellations sur la base d'une variable aléatoire $p \in [0,1]$ en accord avec :

$p > P$ : première constellation choisie ;
$p \leq P$ : seconde constellation choisie.

**2.** Procédé selon la revendication 1, dans lequel la seconde probabilité d'utilisation P est déterminée selon l'équation suivante :

$$P = \frac{(P_e^{(m)}(\gamma) - \beta^{(r)}).m}{(P_e^{(m)}(\gamma) - \beta^{(r)}).m - (P_e^{(\tilde{m})}(\gamma) - \beta^{(r)}).\tilde{m}}$$

**3.** Procédé selon la revendication 1, dans lequel la seconde probabilité d'utilisation P est déterminée selon les étapes suivantes :

déterminer un premier ensemble discret de valeurs ($\Omega$) du rapport signal-sur-bruit du signal reçu ;
déterminer un second ensemble discret de valeurs de probabilité ($\{\overline{P}_1,\overline{P}_2,...,\overline{P}_L\}$) de la seconde probabilité d'utilisation ;
remplir une table de valeurs limite de rapport signal-sur-bruit pour chaque combinaison d'une valeur ($\overline{P}_i$) du second ensemble discret avec une constellation numérique de transmission de l'ensemble ordonné, en :

1) pour chaque rapport signal-sur-bruit du signal reçu du premier ensemble ($\Omega$) :

1i) déterminer un nombre moyen de bits d'un symbole à émettre en tant que la moyenne des nombres de bits $\tilde{m}$ et m de symboles de la seconde constellation et de la première constellation pondérée par la seconde probabilité d'utilisation ($\overline{P}_i$) du second ensemble discret et de sa valeur complémentaire (1-($\overline{P}_i$), respectivement,
1ii) estimer le taux d'erreurs de bits ou le taux d'erreurs de blocs de la communication en correspondance avec le nombre moyen de bits d'un symbole et avec la valeur du premier ensemble discret ;

2) pour la combinaison considérée d'une valeur ($\overline{P}_i$) du second ensemble discret avec la constellation numérique de transmission, mémoriser la valeur limite du rapport signal-sur-bruit qui permet un taux d'erreurs de bits ou un taux d'erreurs de blocs $\beta^{(r)}$ maximum préétabli ;
déterminer la seconde probabilité d'utilisation P en fonction du rapport signal-sur-bruit $\gamma$ du signal reçu, ou bien en lisant dans la table la valeur de probabilité correspondant au rapport signal-sur-bruit $\gamma$ du signal reçu, ou bien en interpolant les valeurs de probabilité correspondant aux valeurs limite de rapport signal-sur-bruit les plus proches du rapport signal-sur-bruit $\gamma$ du signal reçu.

**4.** Procédé selon l'une des revendications 1 à 3, dans lequel l'ensemble ordonné de constellations numériques de transmission comprend BPSK, QPSK, 8-QAM, 16-QAM, 64-QAM, 256-QAM et 1024-QAM.

5. Procédé selon l'une quelconque des revendications 1 à 4, dans lequel les symboles sont transmis par une modulation à porteuses multiples, les étapes du procédé étant exécutées pour chaque porteuse utilisée.

6. Milieu lisible par ordinateur mémorisant un code logiciel adapté à amener un ordinateur à mettre en oeuvre les étapes du procédé selon l'une des revendications 1 à 5 quand le logiciel est exécuté par l'ordinateur.

7. Système HomePlug AV comprenant un circuit propre à exécuter les étapes du procédé selon l'une quelconque des revendications 1 à 5.

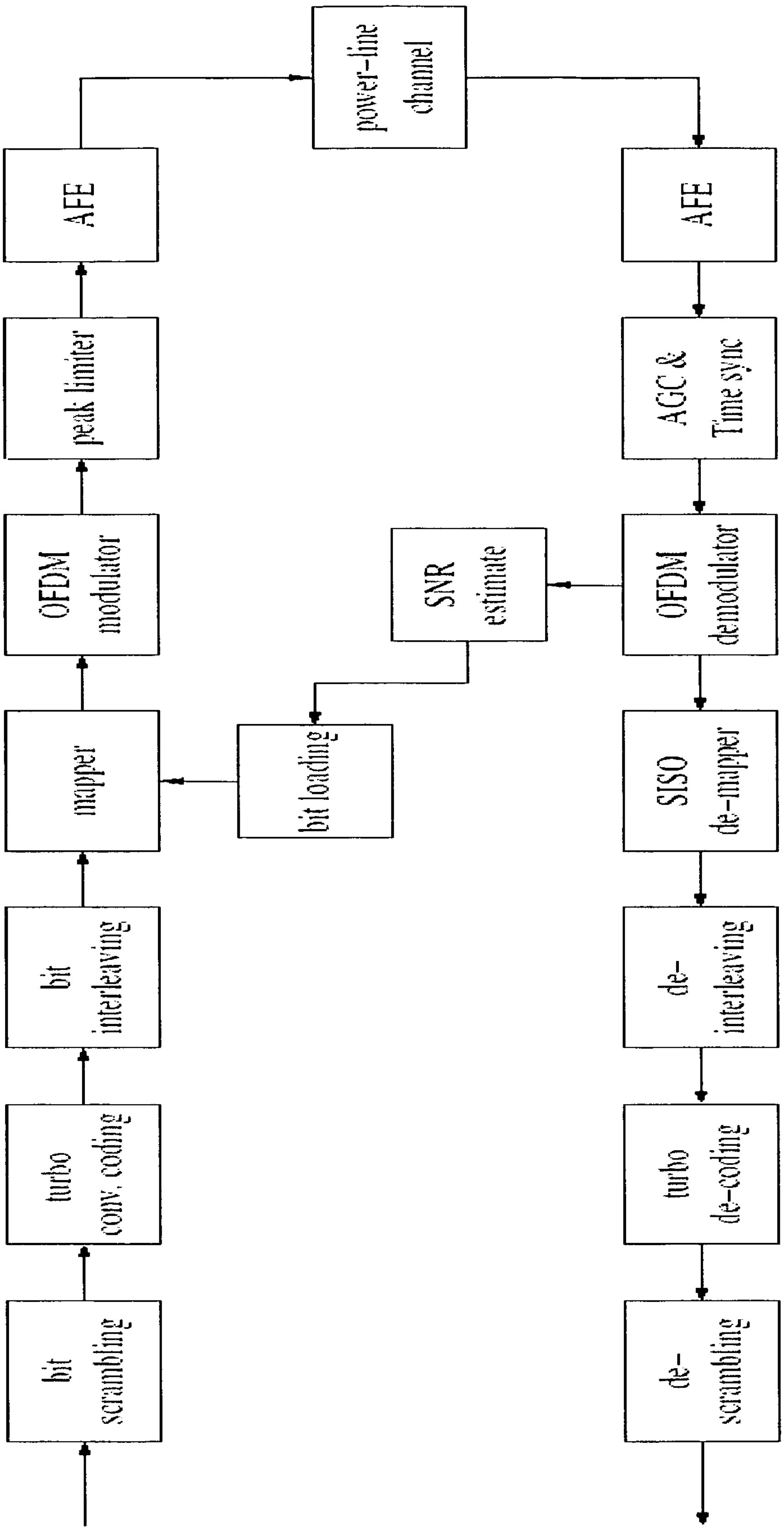
bit scrambling
turbo conv. coding
bit interleaving
mapper
OFDM modulator
peak limiter
AFE
power-line channel
AFE
AGC & Time sync
OFDM demodulator
SNR estimate
bit loading
SISO de-mapper
de-interleaving
turbo de-coding
de-scrambling

FIG. 1

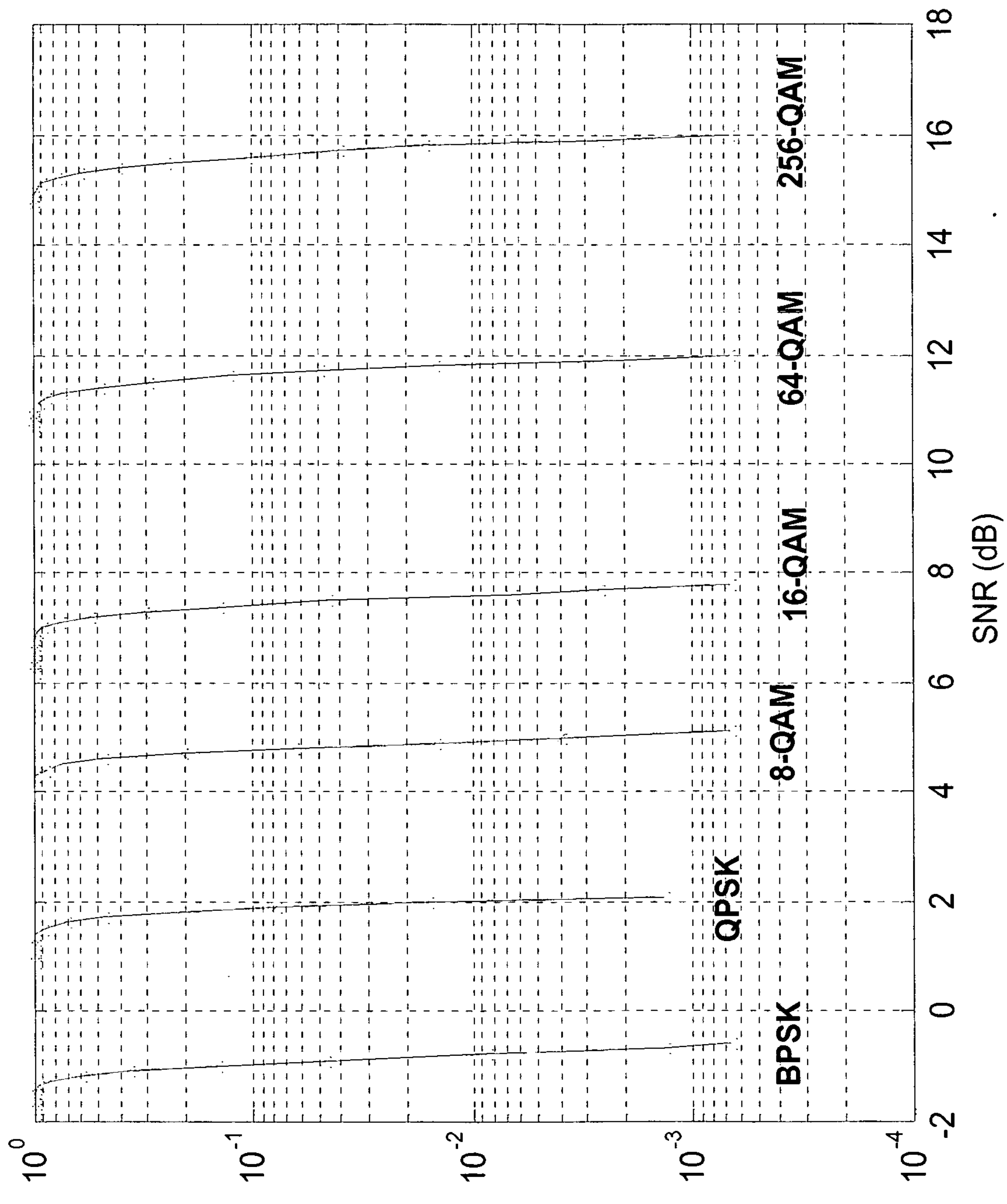
BLER
$10^0$
$10^{-1}$
$10^{-2}$
$10^{-3}$
$10^{-4}$
SNR (dB)
-2
0
2
4
6
8
10
12
14
16
18
BPSK
QPSK
8-QAM
16-QAM
64-QAM
256-QAM

FIG. 2

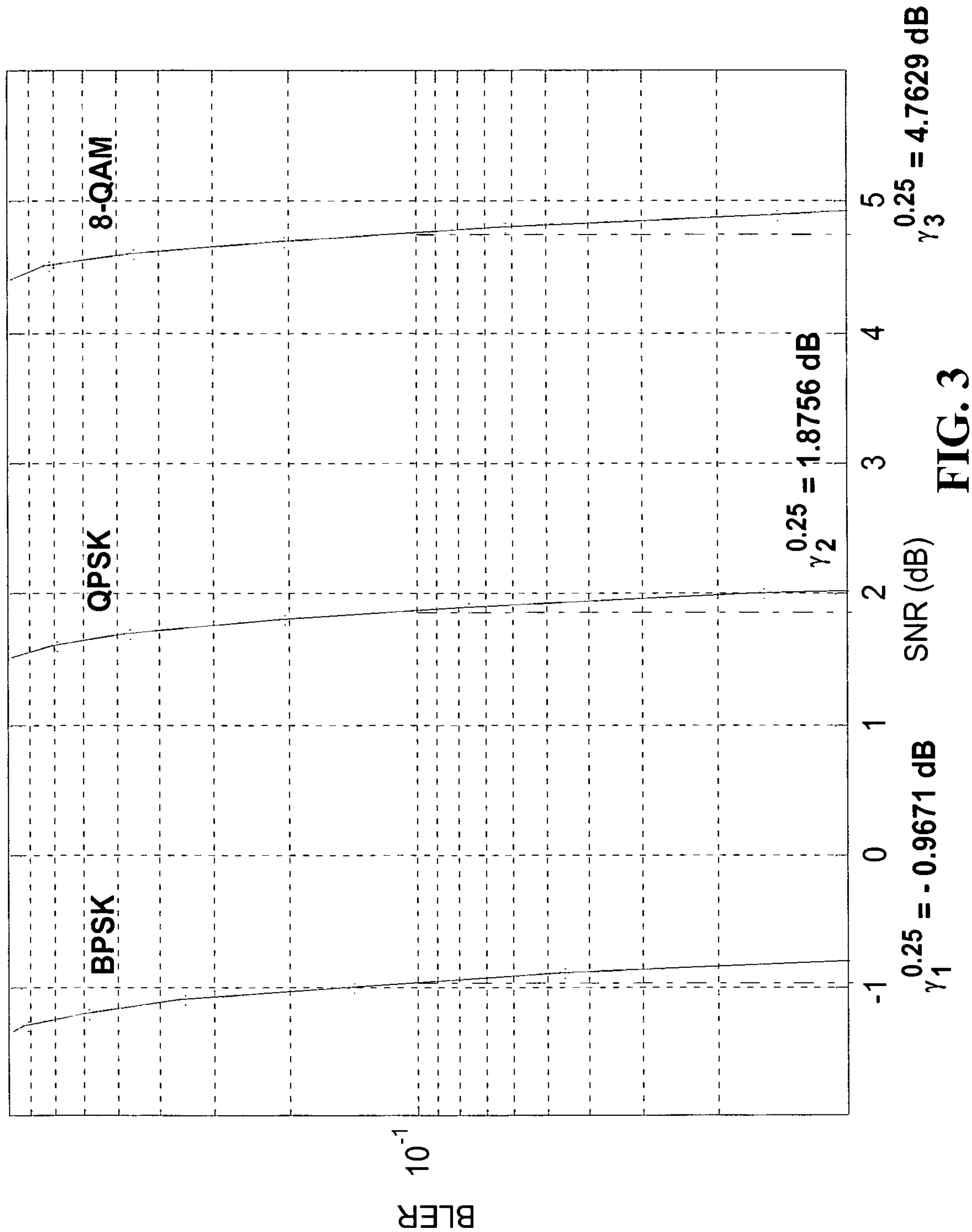
BPSK
QPSK
8-QAM
BLER
$10^{-1}$
SNR (dB)
-1
0
1
2
3
4
5
$\gamma_1^{0.25}$ = - 0.9671 dB
$\gamma_2^{0.25}$ = 1.8756 dB
$\gamma_3^{0.25}$ = 4.7629 dB

FIG. 3

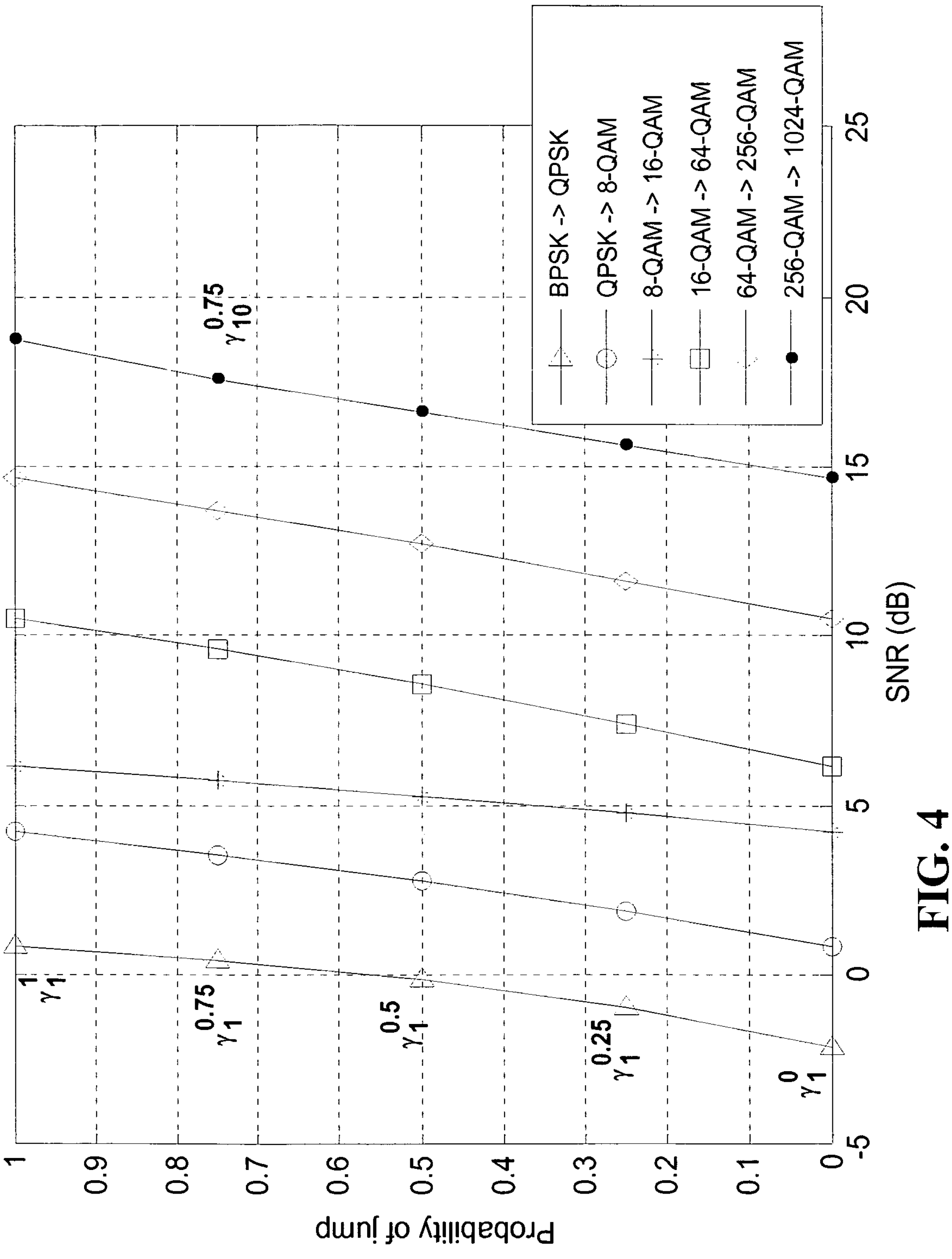
BPSK -> QPSK
QPSK -> 8-QAM
8-QAM -> 16-QAM
16-QAM -> 64-QAM
64-QAM -> 256-QAM
256-QAM -> 1024-QAM
Probability of jump
SNR (dB)
$\gamma_1^1$
$\gamma_1^{0.75}$
$\gamma_1^{0.5}$
$\gamma_1^{0.25}$
$\gamma_1^0$
$\gamma_{10}^{0.75}$
-5
0
5
10
15
20
25
0
0.1
0.2
0.3
0.4
0.5
0.6
0.7
0.8
0.9
1

FIG. 4

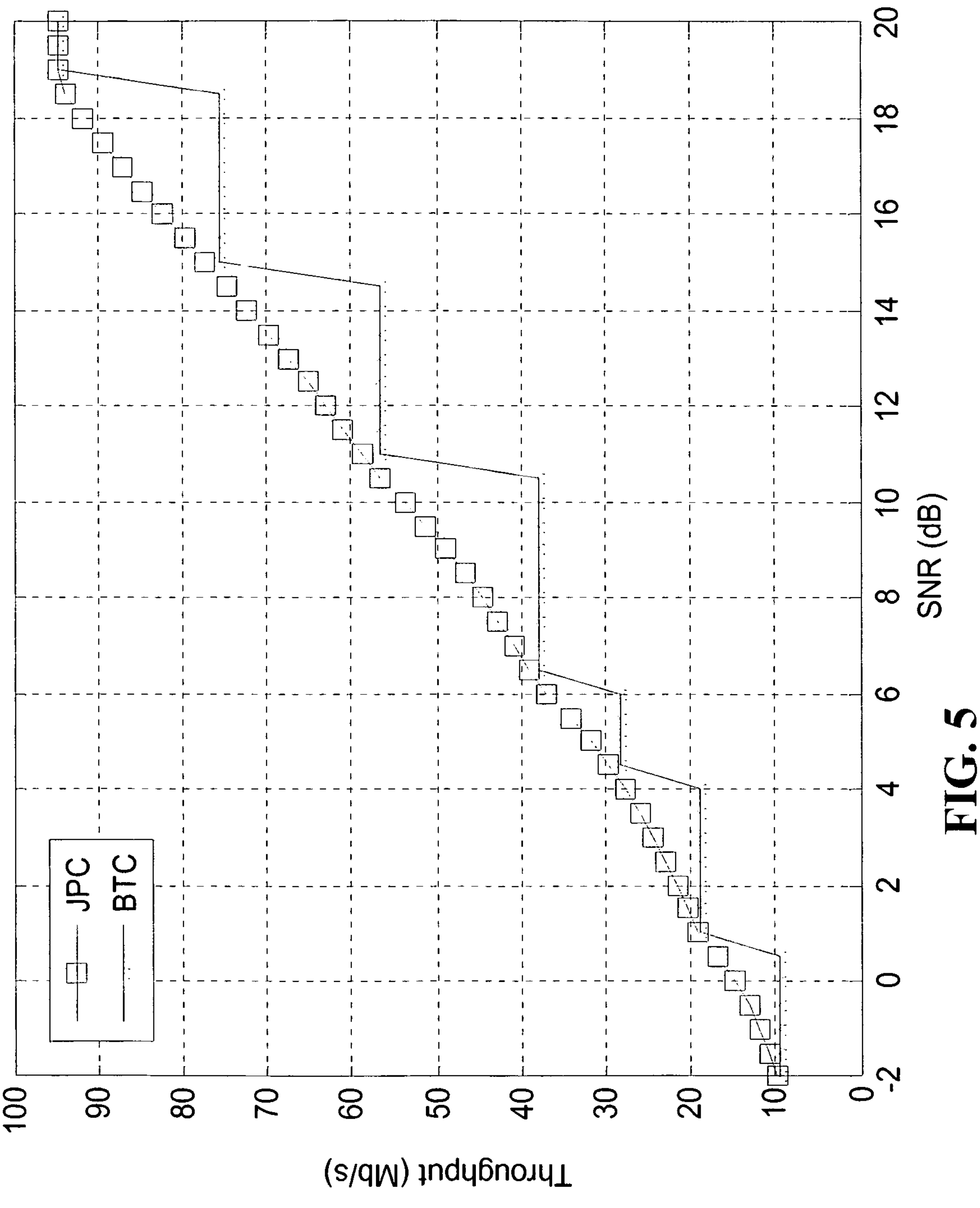

JPC
BTC
Throughput (Mb/s)
SNR (dB)
0
10
20
30
40
50
60
70
80
90
100
-2
0
2
4
6
8
10
12
14
16
18
20


FIG. 5

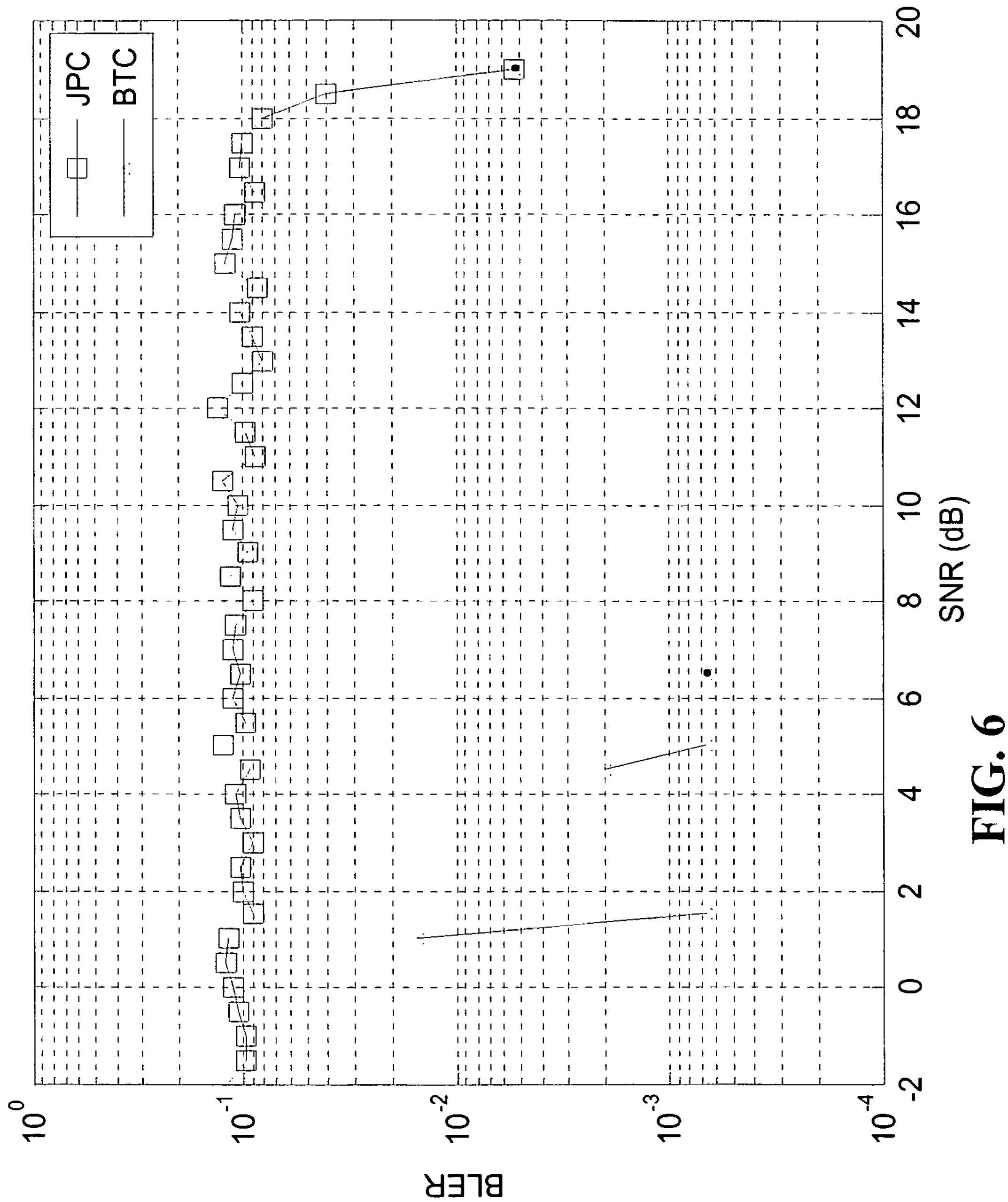


FIG. 6

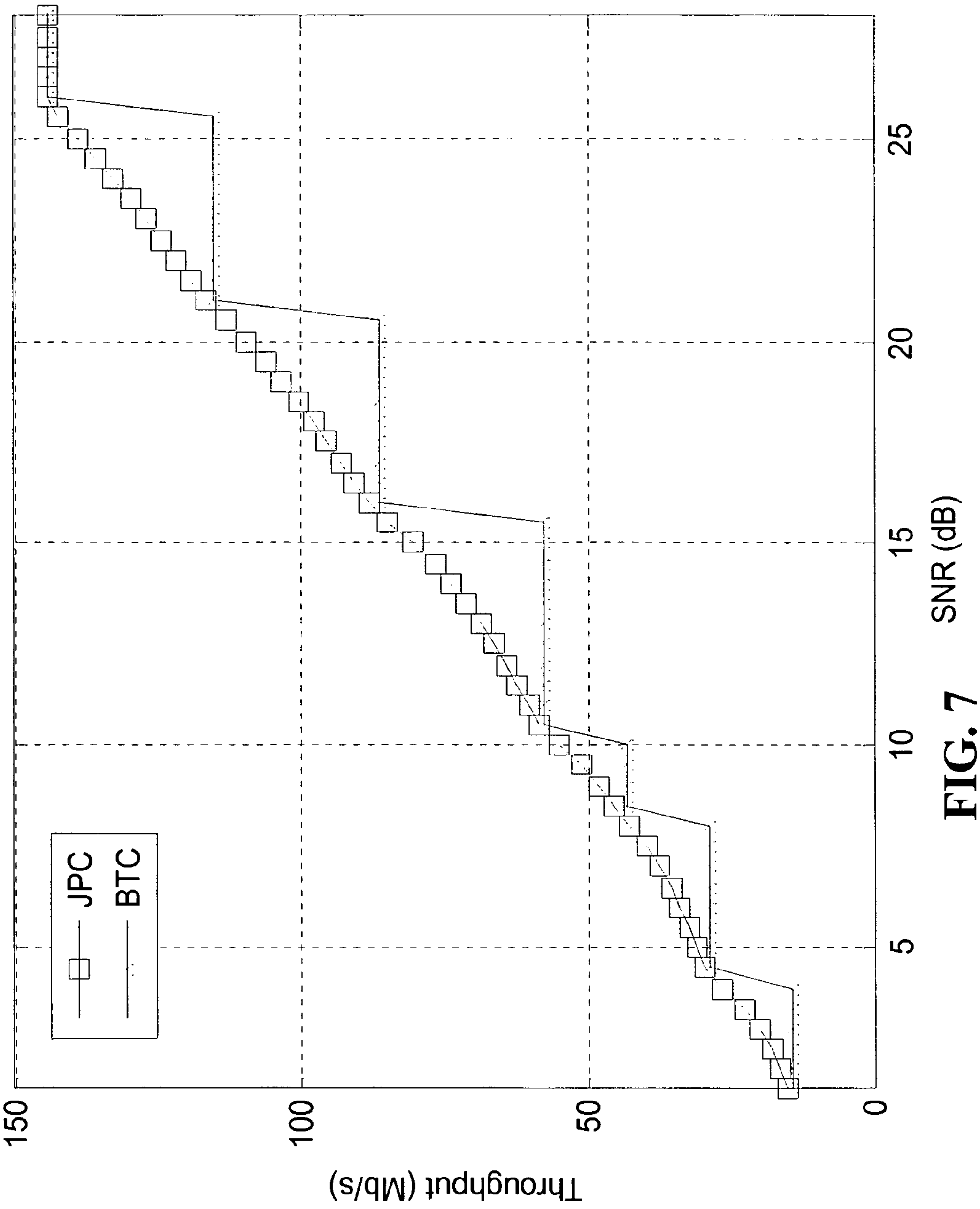


FIG. 7

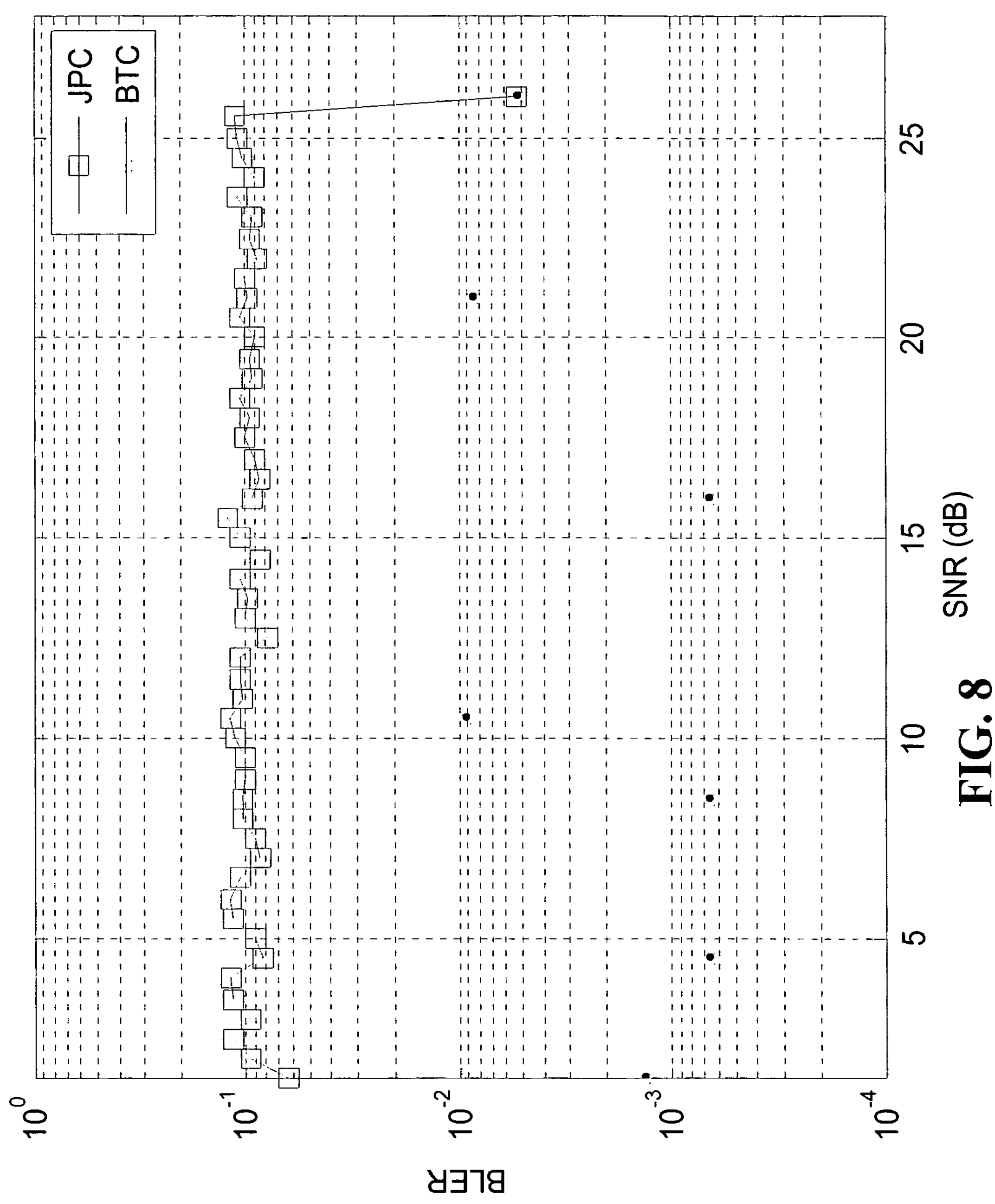


FIG. 8

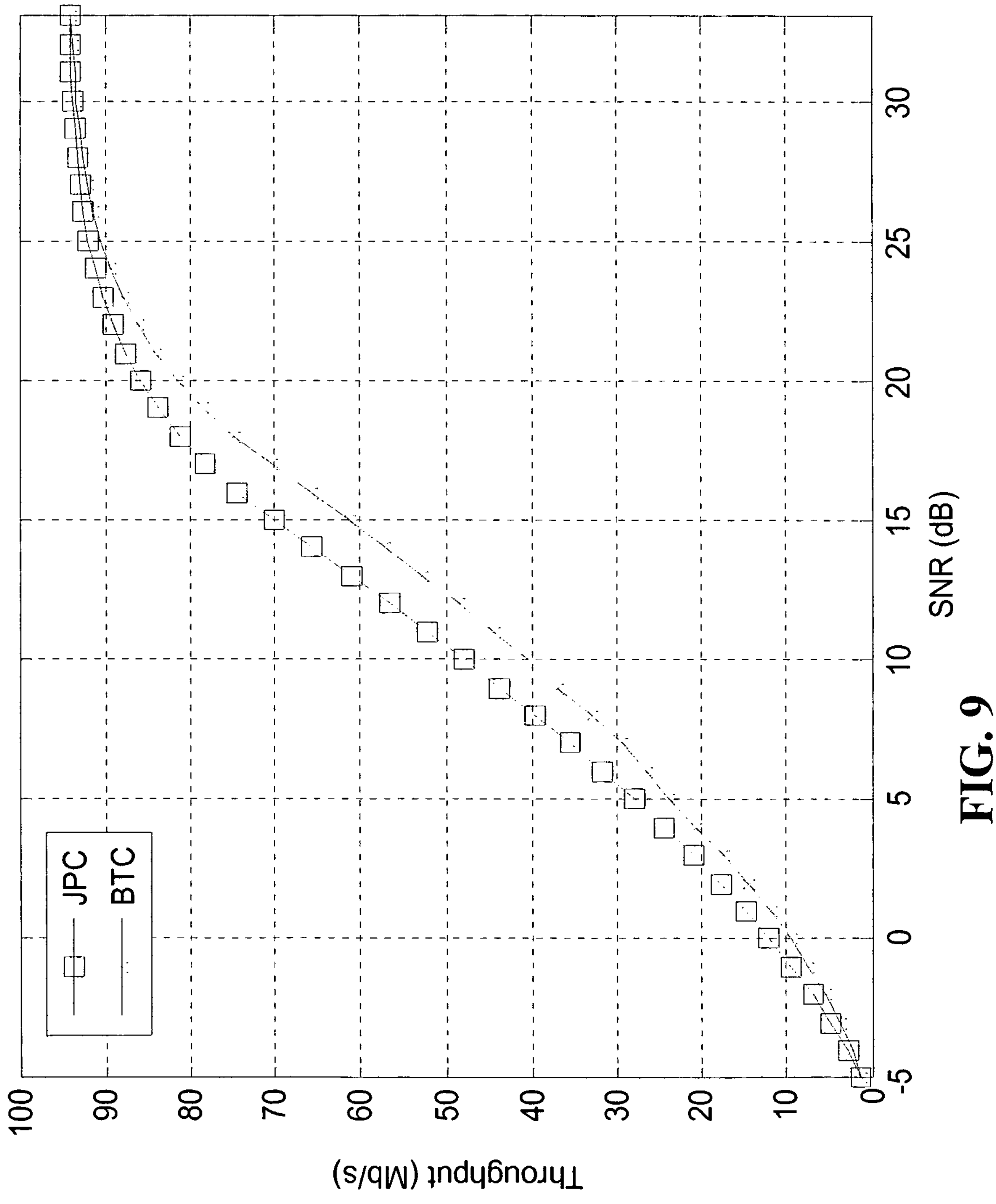
JPC
BTC
Throughput (Mb/s)
SNR (dB)
0
10
20
30
40
50
60
70
80
90
100
-5
0
5
10
15
20
25
30

FIG. 9

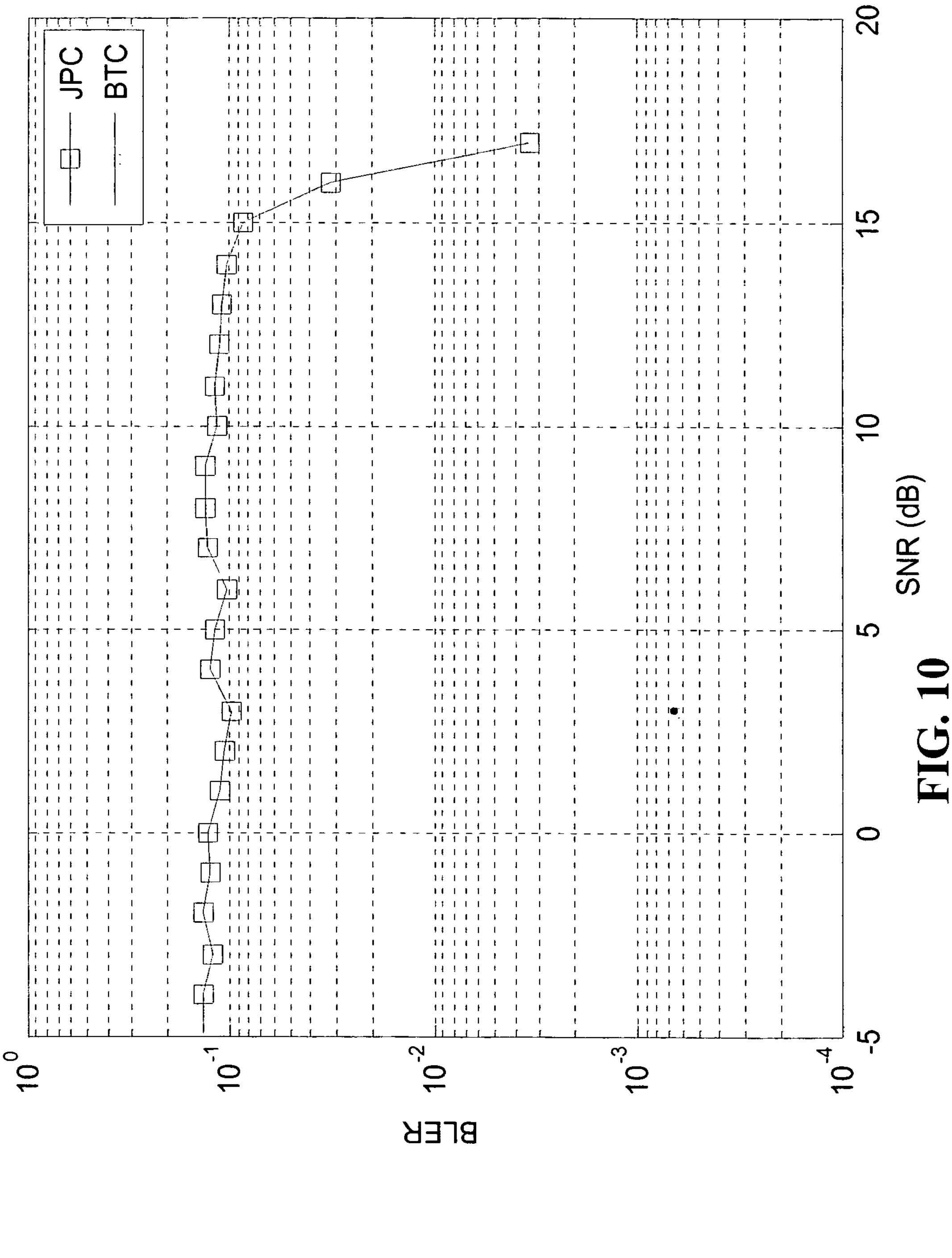


FIG. 10

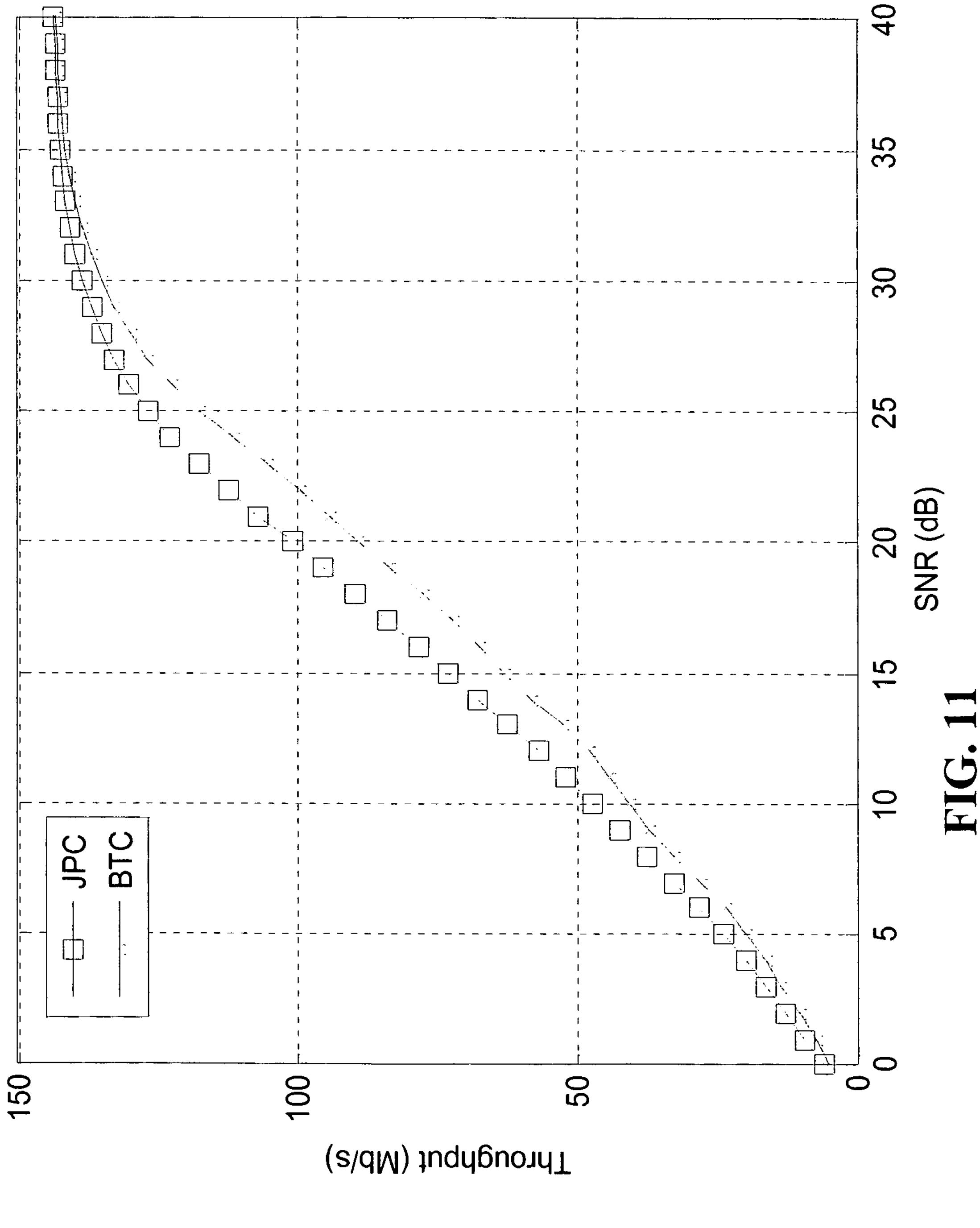


FIG. 11

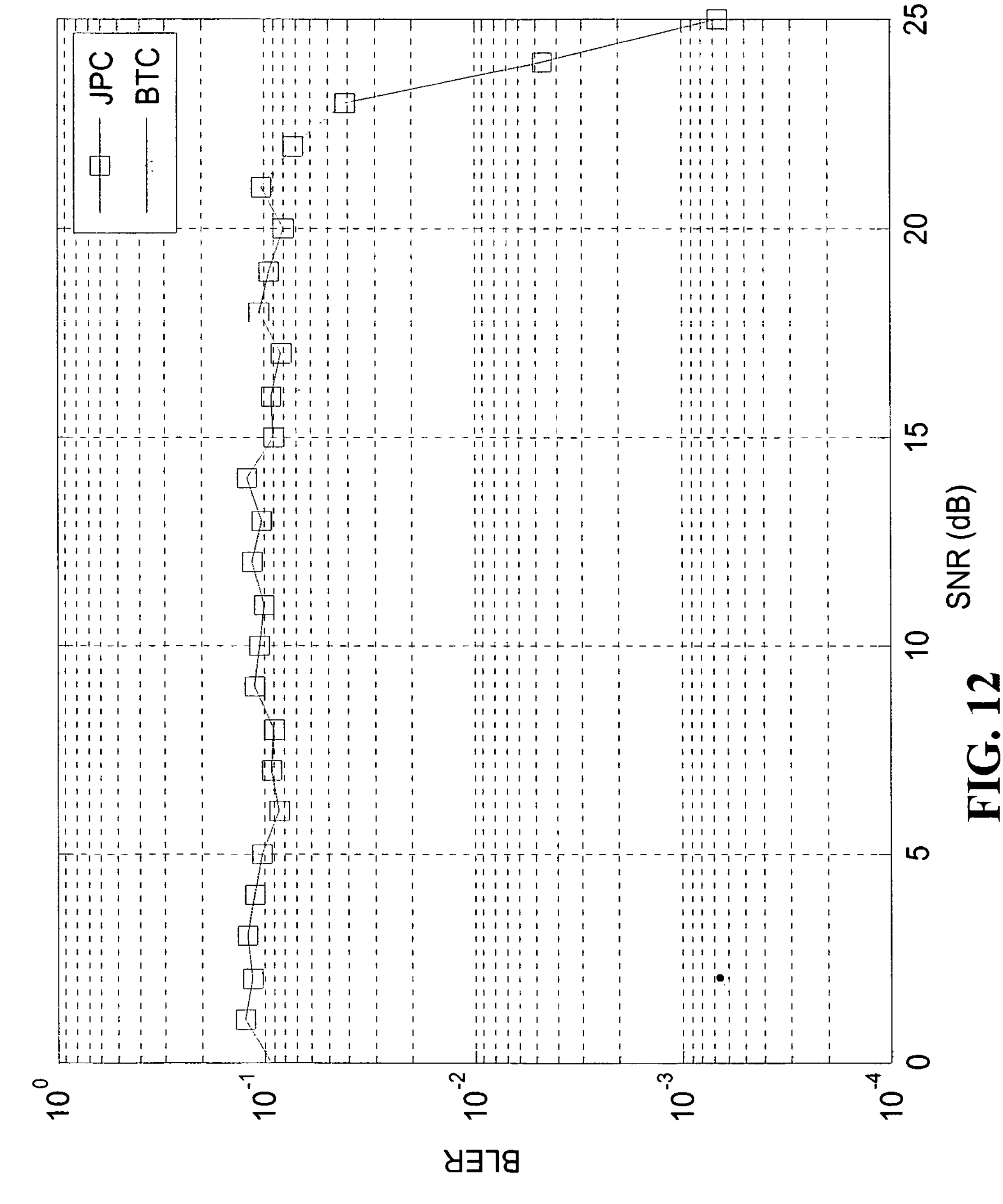


FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20090135934 A1


### Non-patent literature cited in the description


- HomePlug AV baseline specification. *HomePlug PowerLine Alliance,* May 2007
- HomePlug AV white paper. *http://ww.homeplug.org/tech/whitepapers/HPAV-White-Paper_050818.pdf*
- **L. R. BAHL ; J. COCKE ; F. JELINEK ; J. RAVIV.** Optimal decoding of linear codes for minimizing symbol error rate. *IEEE Trans. On Inform. Theory,* March 1974, vol. 20, 284-287
- **J. VOGT ; A. FINGER.** Improving the max-log MAP turbo decoder. *IEEE Elect. Lett.,* November 2000, vol. 36, 1937-1939
- **R. G. GALLAGER.** Information theory and reliable communication. Wiley, 1968
- **J. A. C. BINGHAM.** Multicarrier modulation for data transmission: an idea whose time has come. *IEEE Comm. Magazine,* May 1990, 5-14
- **J. CAMPELLO.** Optimal discrete bit loading for multicarrier modulation systems. *IEEE Symp. Info. Theory,* August 1998, 193
- **A. LEKE ; J. M. CIOFFI.** A maximum rate loading algorithm for discrete multitone modulation systems. *IEEE Globecom 1997,* November 1997, 1514-1518
- **B. S. KRONGOLD ; K. RAMCHANDRAN ; D. L. JONES.** Computationally efficient optimal power allocation algorithms for multicarrier communication systems. *IEEE Trans. on Comm.,* January 2000, 23-27
- **P. S. CHOW ; J. M. CIOFFI ; J. A. C. BINGHAM.** A practical discrete multitone transreceiver loading algorithm for data transmission over spectrally shaped channels. *IEEE Trans. on Comm.,* April 1995, 773-775
- **R. F. H. FISHER ; J. B. HUBER.** A new loading algorithm for discrete multitone transmission. *IEEE Globecom 1996,* November 1996, 724-728
- **J. CAMPELLO.** Practical bit loading for DMT. *IEEE ICC 1999,* June 1999, 801-805
- **N. PAPANDREOU ; T. ANTONAKOPOULOS.** A new computationally efficient discrete bit-loading algorithm for DMT applications. *IEEE Trans. On Comm.,* May 2005, 785-789
- **D. MATAS ; M. LAMARCA.** Optimum power allocation and bit loading with code rate constraint. *IEEE SPAWC 2009,* June 2009, 687-691
- **H. Y. QING ; P. Q. C. M. JIAO.** An efficient bit and power allocation algorithm for multi-carrier systems. *IEEE ICCCAS 2009,* July 2009, 100-103
- **A. M. WYGLINSKI ; F. LABEAU ; P. KABAL.** Bit loading with BER-constraint for multicarrier systems. *IEEE Trans. on Wireless Comm.,* July 2005, 1383-1387
- **E. GUERRINI ; G. DELL'AMICO ; P. BISAGLIA ; L. GUERRIERI.** Bit-loading algorithms and SNR estimates for HomePlug AV. *IEEE ISPLC 2007,* March 2007, 77-82
- **A. MAIGA ; J.-Y. BAUDAIS ; J.-F. HÉLARD.** Very high bit rate power line communications for home networks. *IEEE ISPLC 2009,* March 2009, 313-318
- **L. GUERRIERI ; P. BISAGLIA ; G. DELL'AMICO ; E. GUERRINI.** Performance of the turbo coded HomePlug AV system over power-line channels. *IEEE ISPLC 2007,* March 2007, 138-143
- **N. BENVENUTO ; G. CHERUBINI.** Algotithms for communications systems and their applications. John Wiley & Sons, 2002
- *OPERA proj ect, http://www.ist-opera.org*
- **M. BABIC ; M. HAGENAU ; K. DOSTERT ; J. BAUSCH.** Theoretical postulation of PLC channel model. *OPERA, Tech. Rep.,* March 2005